# EUROPEAN PATENT SPECIFICATION

(11) **EP 3 926 737 B1**
(45) Date of publication and mention of the grant of the patent: **21.02.2024**
(21) Application number: 20885093.3
(22) Date of filing: 24.10.2020
(51) Int. Cl.: H01M 50/10

(54) **ELECTRICAL CONNECTION PIECE, BATTERY MODULE, BATTERY SET AND APPARATUS**
ELEKTRISCHES ANSCHLUSSSTÜCK, BATTERIEMODUL, BATTERIESATZ UND VORRICHTUNG
PIÈCE DE CONNEXION ÉLECTRIQUE, MODULE DE BATTERIE, ENSEMBLE BATTERIE ET APPAREIL

(30) Priority: 04.11.2019 CN 201921885117 U
(43) Date of publication of application: 22.12.2021
(60) Divisional application: 23217481.3
(73) Proprietor: Contemporary Amperex Technology Co., Limited, Jiaocheng District Ningde City Fujian 352100 (CN)
(72) Inventor: XU, Xiao, Ningde City, Fujian 352100 (CN); HUANG, Yangzhi, Ningde City, Fujian 352100 (CN); SHEN, Sheng, Ningde City, Fujian 352100 (CN)
(74) Representative: Herrero & Asociados, S.L.
(86) International application number: PCT/CN2020/123464
(87) International publication number: WO 2021/088667

(56) References cited:
- CN-A- 106 784 570
- CN-A- 109 103 408
- CN-A- 109 103 408
- CN-U- 204 857 840
- CN-U- 208 589 484
- CN-U- 210 467 950
- DE-A1-102011 081 106
- JP-A- 2008 311 074
- US-A1- 2013 029 204
- US-A1- 2013 089 755

## Description

### TECHNICAL FIELD

This application relates to the technical field of energy storage devices, and in particular, to an electrical connecting plate, a battery module, a battery pack, and a device.

### BACKGROUND

With popularization of new energy electric vehicles, requirements imposed by vehicle manufacturers on a power battery pack are diversified. Especially, requirements on energy density, safety, and compatibility of a battery module are increasingly higher. Battery cells in the battery module are connected to each other by an electrical connecting plate, and output voltage outward after being connected in series and in parallel. Currently, fast charge technology of batteries has gradually become prevailing, a temperature of the electrical connecting plate is usually very high during fast charge. A too high temperature affects safety performance of the battery cells and the battery module.

Due to design requirements of the battery module, an avoidance region needs to be disposed on a body portion of the electrical connecting plate, thereby reducing a passage area on the body portion and reducing a current-carrying capacity. Consequently, a temperature rise is too high, and safety problems are likely to occur.

CN109103408A discloses an aluminum connecting piece for a power battery module, which comprises a connecting piece body and two flap pieces respectively connected on two sides of the connecting piecebody. A locating hole is respectively arranged at two end of that connecting piece body, two flap pieces are symmetrically arranged along the transverse center line of the connecting piece body, anda first gap or contact is left between the two flap pieces. Instead of the traditional method of increasing the area of the overflow by increasing the thickness, the invention increases the width, that is, a folding piece is connected to the connecting piece body, so that the thickness can reach the optimum processing thickness in the process, the weight of the cell module can be reduced, and theenergy density of the battery pack can be increased to a certain extent. In addition, the thickness is thinner, the welding penetration is larger, and the welding is easier and more firm.

US20130089755A1 discloses a battery pack and a lead electrode for a battery pack. A lead electrode includes a plurality of end connecting portions, each connectable to a battery cell or a protection circuit module, and a body portion connecting the plurality of end connecting portions and having a thickness greater than a thickness of the end connecting portions.

US20130029204A1 discloses battery modules having interconnect members. An interconnect member includes a first plate portion having a first thickness. The interconnect member further includes a second plate portion having a second thickness equal to the first thickness. The second plate portion extends generally parallel to the first plate portion. The interconnect member further includes a first vibration dampening portion coupled to the first and second plate portions. The first vibration dampening portion has a third thickness greater than the first thickness, such that vibrations induced on the first plate portion are attenuated when a portion of the vibrations pass through the first vibration dampening portion to the second plate portion. JP2008311074A discloses a tab terminal without soldering capable of easily connecting a connection terminal for drawing out a large current from positive and negative electrode terminals of a battery and a receptacle terminal, and capable of continuously flowing a large current. The tab terminal 1 connected with a battery is provided with a connecting part 12 connected with positive and negative terminals of the battery at a wide-width part 11 of a plate body, and an insertion-coupling part 14 with the receptacle terminal connecting folded narrow-width parts at the narrow-width parts 13 extended from the wide-width part.

### SUMMARY

The scope of the invention is defined by the appended set of claims.

This application provides an electrical connecting plate, a battery module, a battery pack, and a device to increase a passage area and improve a current-carrying capacity of the electrical connecting plate.

A first aspect of this application provides an electrical connecting plate. The electrical connecting plate is configured to electrically connect a plurality of battery cells of a battery module. The electrical connecting plate includes a first part and a second part.

The first part includes a current-increasing portion and a body portion containing an avoidance region, the avoidance region is a via hole or notch opened in the electrical connecting plate, and is configured to avoid parts of the battery cells, the current-increasing portion is configured to increase the passage area of the electrical connecting plate.

The current-increasing portion is located in a specified region around the avoidance region. The current-increasing portion is connected to a side of the body portion in a thickness direction of the electrical connecting plate.

The second part is connected to ends of the body portion and is configured to connect to the battery cell.

In some embodiments, the body portion includes a first body portion and a connecting section. The avoidance region is a via hole or notch opened in the connecting section.

The current-increasing portion is located on the first body portion, and a width of the current-increasing portion is less than a width of the first body portion.

In some embodiments, the body portion further includes a second body portion. The first body portion is connected to the second body portion through the connecting section.

The current-increasing portion is located on the first body portion and/or the second body portion.

In some embodiments, the avoidance region is a via hole opened in the connecting section, and the current-increasing portion is located in the connecting section.

In some embodiments, the current-increasing portion includes a first current-increasing portion and a second current-increasing portion.

The first current-increasing portion, the via hole, and the second current-increasing portion are spaced out in a width direction of the connecting section.

In some embodiments, a groove is further disposed in the body portion, and the groove is located on one or two sides of the current-increasing portion.

In some embodiments, the current-increasing portion and the body portion are integrally formed.

The current-increasing portion is bent along a side wall of the body portion, and the body portion fits snugly with the current-increasing portion.

A second aspect of this application further provides a battery module, including a plurality of battery cells and the electrical connecting plate described above. A second part of the electrical connecting plate electrically connects electrode leads of the battery cells.

A third aspect of this application further provides a battery pack, including the battery module described above.

A fourth aspect of this application further provides a device using a battery cell as a power supply. The device includes: a power source configured to provide a driving force for the device; and a battery module described above and configured to provide electrical energy to the power source.

The technical solutions provided in this application achieve the following beneficial effects:
The first part of the electrical connecting plate according to this application includes a body portion and a current-increasing portion, and the body portion contains an avoidance region. The current-increasing portion is located in a specified region around the avoidance region, and the current-increasing portion is connected to a side of the body portion. At the body portion containing the avoidance region, the area decreases, and therefore, the passage area also decreases. Therefore, the current-increasing portion is disposed in a specified region around the avoidance region to increase the passage area and effectively improve the current-carrying capacity of the electrical connecting plate.

Understandably, the above general description and the following detailed description are merely exemplary without limiting this application.

### BRIEF DESCRIPTION OF DRAWINGS

To describe the technical solutions in the embodiments of this application more clearly, the following outlines the drawings used in the embodiments of this application. Apparently, the drawings outlined below are merely a part of embodiments of this application. A person of ordinary skill in the art may derive other drawings from the outlined drawings without making any creative efforts.
FIG. 1 is a schematic structural diagram of a battery pack according to an embodiment of this application;
FIG. 2 is a schematic structural diagram of a battery module according to an embodiment of this application;
FIG. 3 is an exploded view of a battery module according to an embodiment of this application;
FIG. 4 is a schematic structural diagram of a battery cell according to an embodiment of this application;
FIG. 5 is an exploded view of a battery cell according to an embodiment of this application;
FIG. 6 is a schematic structural diagram of a first type of electrical connecting plate according to an embodiment of this application;
FIG. 7 is a front view of a first type of electrical connecting plate after a current-increasing portion is bent according to an embodiment of this application;
FIG. 8 is a front view of a first type of electrical connecting plate before a current-increasing portion is bent according to an embodiment of this application;
FIG. 9 is a local detailed view of a part of the first type of electrical connecting plate shown in FIG. 8 according to an embodiment of this application;
FIG. 10 is a schematic structural diagram of a second type of electrical connecting plate according to an embodiment of this application; and
FIG. 11 is a schematic structural diagram of a third type of electrical connecting plate according to an embodiment of this application.

### Reference numerals:

P-battery pack; M-battery module; 1-electrical connecting plate; 10-first part; 101-body portion; 101a-avoidance region; 101b-first body portion; 101c-second body portion; 101d-connecting section; 101da-first connecting section; 101db-second connecting section; 101e-groove; 102-current-increasing portion; 102a-first current-increasing portion; 102b-second current-increasing portion; 102c-third current-increasing portion; 11-second part; 2-frame structure; 20-side plate; 21-end plate; 3-battery cell; 30-top cover assembly; 301-top cover plate; 302-electrode lead; 303-explosion-proof aperture; 31-housing; 32-electrode assembly; 4-box body; 40-upper box; and 41-lower box.

### DETAILED DESCRIPTION OF EMBODIMENTS

The following gives a more detailed description of implementations of this application with reference to accompanying drawings and embodiments. The detailed description of the following embodiments and the accompanying drawings are intended to exemplarily describe the principles of this application, but not to limit the scope of this application. Therefore, this application is not limited to the described embodiments. In the description of this application, unless otherwise specified, "a plurality of" means two or more; the terms such as "upper", "lower", "left", "right", "inner", and "outer" indicating a direction or a position relationship are merely intended for ease or brevity of description of this application, but do not indicate or imply that the device or component referred to must be located in the specified direction or constructed or operated in the specified direction. Therefore, such terms shall not be understood as a limitation on this application. In addition, the terms "first", "second", and "third" are merely intended for descriptive purposes, but are not intended to indicate or imply relative importance. "Perpendicular" is not exactly perpendicular, but within an error tolerance range. "Parallel" is not exactly parallel, but within an error tolerance range.

The directional terms appearing in the following description indicate the directions shown in the drawings, but are not intended to limit specific structures in this application. In the context of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

An embodiment of this application provides a device using a battery cell as a power supply. The device includes: a power source, where the power source is configured to provide a driving force for the device; and a battery module M configured to provide electrical energy to the power source. The device using a battery cell 3 as a power supply may be a mobile device such as a vehicle, a ship, or a small aircraft. The device includes a power source, and the power source is configured to provide a driving force for the device. The power supply may be configured as a battery module M that provides electrical energy to the power source. The driving force of the device may be sole electrical energy, or may include electrical energy and other types of energy (such as mechanical energy). The power source may be a battery module M (or a battery pack P), or may be a combination of a battery module M (or battery pack P) and an engine, or the like. Therefore, all devices that can use a battery cell 3 as a power supply fall within the protection scope of this application.

Using a vehicle as an example, a vehicle according to an embodiment of this application may be a new energy vehicle. The new energy vehicle may be a battery electric vehicle, or may be a hybrid electric vehicle, a range-extended electric vehicle, or the like. The vehicle may include a battery pack and a vehicle body. The battery pack is disposed in the vehicle body. A driving motor is further disposed in the vehicle body, and the driving motor is electrically connected to the battery pack. The battery pack provides electrical energy. The driving motor is connected to wheels of the vehicle body through a transmission mechanism to drive the vehicle to run. Specifically, the battery pack may be horizontally disposed at a bottom of the vehicle body.

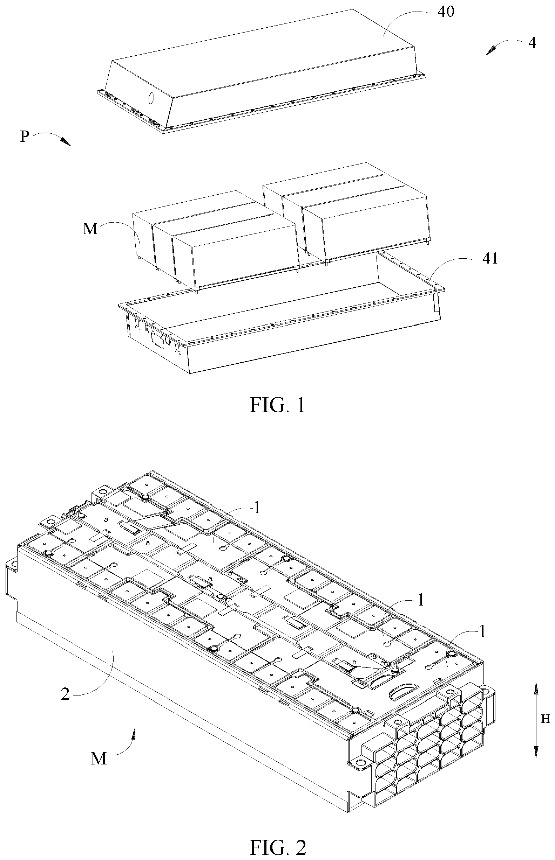

As shown in FIG. 1, a battery pack P according to this embodiment of this application includes a box body 4 and a battery module M disposed in the box body 4. The box body 4 may be made of aluminum, an aluminum alloy or another metal material. The box body 4 includes an upper box 40 and a lower box 41. The upper box 40 is snap-fitted with the lower box 41 to form an accommodation cavity. The accommodation cavity can accommodate one or at least two battery modules M. The battery modules M may be disposed alongside in a length direction of the battery pack P in the box body 4, or may be disposed alongside in a width direction of the battery pack P. Each battery module M is fixed to the box body 4.

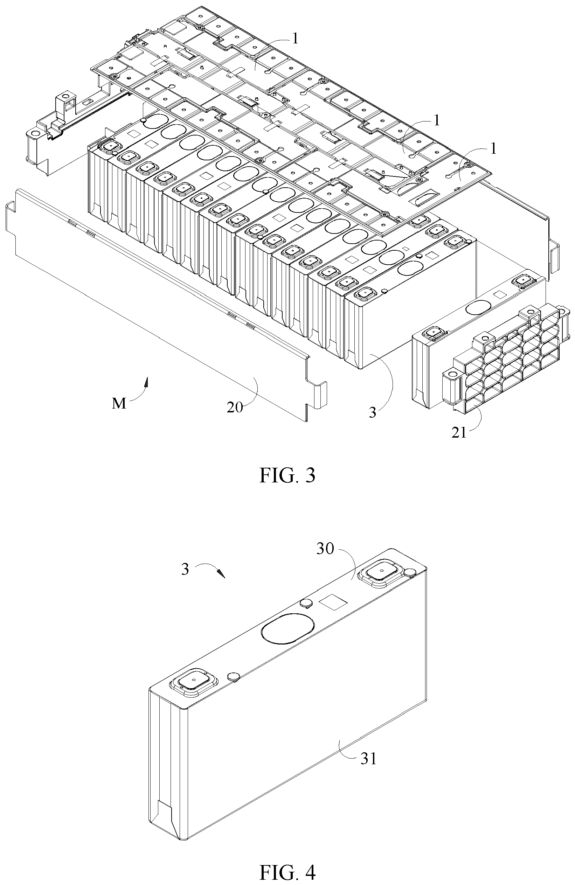

As shown in FIG. 2 and FIG. 3, an embodiment of this application provides a battery module M, including a plurality of battery cells 3 and a frame structure 2. The battery cells 3 may be secondary batteries that can be repeatedly charged and discharged. A plurality of battery cells 3 are located in the inner cavity of the frame structure 2 and stacked on each other in the inner cavity. The frame structure 2 includes side plates 20 and end plates 21. The side plates 20 and the end plates 21 jointly fix the battery cells 3. The battery cells 3 are connected to each other in series or in parallel by an electrical connecting plate 1.

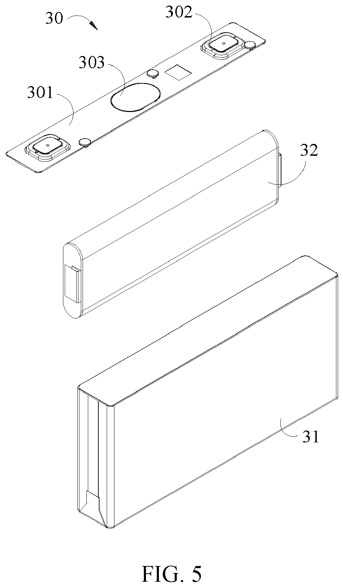

As shown in FIG. 4 and FIG. 5, a battery cell 3 includes at least an electrode assembly 32, a housing 31, and electrode leads 302. The housing 31 may be a hexahedron or another shape. An accommodation cavity is formed in the housing 31, and is configured to accommodate the electrode assembly 32 and an electrolytic solution. The electrode leads 302 are electrically connected to the electrode assembly 32. The housing 31 may include a metal material, such as aluminum or an aluminum alloy, or may include an insulation material such as plastic.

As shown in FIG. 5, a top cover assembly 30 includes a top cover plate 301 and electrode leads 302. The top cover plate 301 is fixed to an opening of the housing 31, so that the electrode assembly 32 and the electrolytic solution are enclosed in the accommodation cavity of the housing 31. The electrode leads 302 are disposed on the top cover plate 301. The top cover plate 301 contains an explosion-proof aperture 303.

The battery module M further includes an electrical connecting plate 1. The electrical connecting plate 1 electrically connects the electrode leads 302 of a plurality of battery cells 3 so that the plurality of battery cells 3 are connected to each other in series or in parallel.

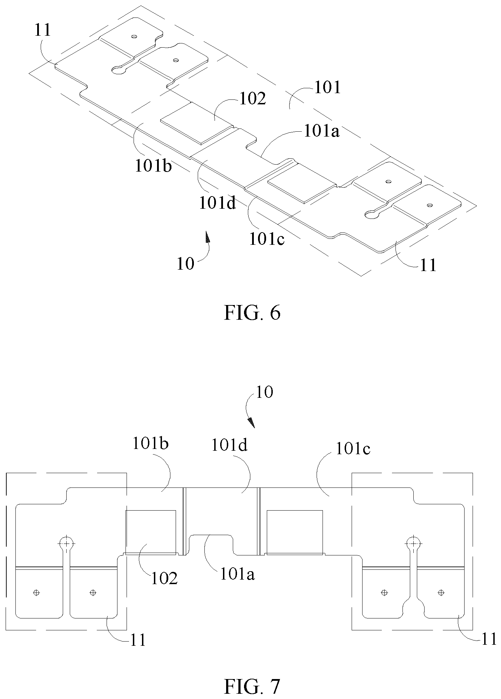

As shown in FIG. 6 to FIG. 9, an embodiment of this application provides an electrical connecting plate 1 for a battery module M, including a first part 10 and a second part 11. The first part 10 includes a body portion 101 and a current-increasing portion 102. The body portion 101 contains an avoidance region 101a. The current-increasing portion 102 is located in a specified region around the avoidance region 101a. The second part 11 is connected to ends of the body portion 101 and is configured to connect to the battery cells 3.

When the electrical connecting plate 1 connects to the battery cells 3, in order to avoid parts of the battery cells 3 such as an explosion-proof valve disposed at the explosion-proof aperture 303, an avoidance region 101a needs to be disposed on the electrical connecting plate 1. After the avoidance region 101a is disposed, a current-carrying capacity of the electrical connecting plate 1 is reduced, thereby resulting in a too high temperature rise and vulnerability to safety problems.

In the electrical connecting plate 1 according to an embodiment of this application, at the body portion 101 containing the avoidance region 101a , the area decreases, and therefore, the passage area also decreases. Therefore, the current-increasing portion 102 is disposed in a specified region around the avoidance region 101a to increase the passage area and effectively improve the current-carrying capacity of the electrical connecting plate 1.

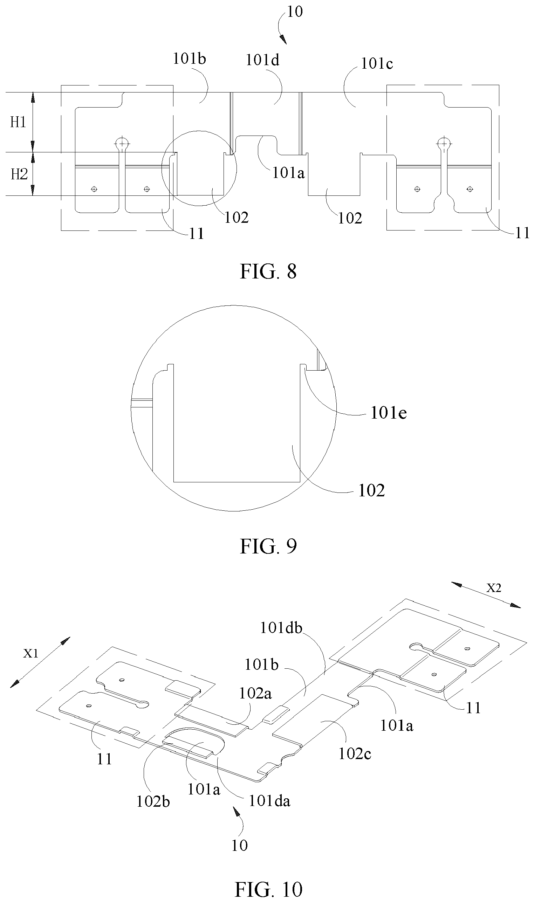

Understandably, the current-increasing portion 102 may be located in a specified region around the avoidance region 101a according to actual conditions, for example, located in a region using a center of the avoidance region 101a as a center and using a specified value as a radius, or a region using a reference edge of the avoidance region 101a as a reference and extending for a specified distance, or the like. This is not limited herein. In this embodiment, as shown in FIG. 8, the first part 10 and the second part 11 are an integrated structure, so as to facilitate processing and manufacturing of the electrical connecting plate 1. Specifically, the electrical connecting plate 1 may be a plate-like or sheet-like structure made of a metal material. More specifically, in this embodiment, the current-increasing portion 102 of the first part 10 and the body portion 101 are integrally formed. That is, the current-increasing portion 102 and the body portion 101 each are an integral part of the electrical connecting plate 1.

Specifically, the electrical connecting plate 1 may be manufactured by trimming. First, according to design requirements, the electrical connecting plate 1 shown in FIG. 8 is obtained by trimming a metal plate or a metal sheet. In this case, two ends of the first part 10 of the electrical connecting plate 1 are connected to two second parts 11 respectively, and the current-increasing portion 102 is connected to a side wall of the body portion 101. Subsequently, the current-increasing portion 102 is bent along a side wall of the body portion 101 so that the current-increasing portion 102 fits snugly with the body portion 101. To be specific, the current-increasing portion 102 obtained by cutting is bent and then flattened, so that the current-increasing portion 102 fits closely with the body portion 101 to obtain the electrical connecting plate 1 shown in FIG. 7. In this case, the current-increasing portion 102 is connected to a side of the body portion 101 in a thickness direction H of the electrical connecting plate 1. By bending the current-increasing portion 102, a space in a width direction and a height direction of the battery module M can be saved. Compared with a practice of bending the current-increasing portion 102 to form an angle to the body portion 101, the practice of fitting snugly with the body portion 101 optimizes a forming process, and can control the shape and position of the bent electrical connecting plate 1 more accurately. This practice can also shorten a passage path and increase a passage cross-sectional area at a snugly fitting position, thereby reducing a resistance of the electrical connecting plate 1 and reducing a temperature rise.

Further, it needs to be noted that the shape of the current-increasing portion 102 may be a rectangular, trapezoidal or irregular shape, as long as the current-increasing portion 102 does not exceed edges of the body portion 101 and the second part 11. This facilitates the manufacturing of the electrical connecting plate 1, and avoids material waste caused by too much scrap generated during the cutting.

Alternatively, the electrical connecting plate 1 may be manufactured integrally by a casting or machining process. A side of the body portion 101 is locally thickened in the thickness direction H of the electrical connecting plate 1 to form the current-increasing portion 102.

In this embodiment of this application, the body portion 101 includes a first body portion 101b and a connecting section 101d. The avoidance region 101a is a via hole or notch opened in the connecting section 101d. In this case, one end of the first body portion 101b is connected to one second part 11, the other end is connected to one end of the connecting section 101d, and the other end of the connecting section 101d is connected to the other second part 11. In this embodiment, the avoidance region 101a is disposed in the connecting section 101d. The avoidance region 101a may be in the form of a via hole or a notch to avoid the structure of the battery cells 3. The current-increasing portion 102b may be disposed on the first body portion 101b.

When the avoidance region 101a is a notch, the connecting section 101d may be locally narrowed. Electrode leads 302 of some battery cells 3 contain a protruding part, and the notch fits the protruding part, thereby facilitating connection between the body portion 101 and the battery cells 3. However, after the notch is disposed in the connecting section 101d, the area at the position of the notch decreases, and the passage area at the position also decreases. Therefore, a current-increasing portion 102 is disposed in a specified region around the notch to increase the passage area and effectively improve the current-carrying capacity of the electrical connecting plate 1.

When the avoidance region 101a is a via hole, the via hole may be disposed to avoid an explosion-proof valve of a battery cell 3. Therefore, a hole is opened on the electrical connecting plate 1. However, after the hole is opened, the area at this position of the connecting section 101d is reduced, and the passage area at this position also decreases. Therefore, a current-increasing portion 102 is disposed in a specified region around the avoidance region 101a to increase the passage area and effectively improve the current-carrying capacity of the electrical connecting plate 1.

As shown in FIG. 6 to FIG. 8, in this embodiment of this application, the current-increasing portion 102 is located on the first body portion 101b, and a width H2 of the current-increasing portion 102 is less than a width H1 of the first body portion 101b. The battery module M usually further includes a wiring harness separator. To avoid being restricted by the wiring harness separator, the width of the current-increasing portion 102 disposed is less than the width of the first body portion 101b, thereby facilitating overall assembly of the battery module M. Understandably, the closer the width of the current-increasing portion 102 is to the width of the first body portion 101b, the larger the passage area of the electrical connecting plate 1.

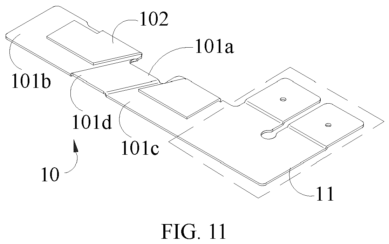

In a specific implementation, the body portion 101 further includes a second body portion 101c. The first body portion 101b is connected to the second body portion 101c by the connecting section 101d. The current-increasing portion 102 is located on the first body portion 101b and/or the second body portion 101c. As shown in FIG. 6, there are two current-increasing portions 102 located on the first body portion 101b and the second body portion 101c respectively. The electrical connecting plate 1 is generally located in the middle of the battery module M, and is configured to electrically connect the electrode leads 302 of the battery cells 3. Alternatively, as shown in FIG. 11, the current-increasing portion 102 is located on the first body portion 101b and the second body portion 101c separately. The electrical connecting plate 1 shown in FIG. 11 is generally located at an edge of the battery module M, and is configured to electrically connect the electrode leads 302 of the battery cells 3 located in an edge position.

It needs to be noted that the current-increasing portion 102 is disposed on both sides of the connecting section 101d containing a notch. Compared with a circumstance in which the current-increasing portion 102 is disposed on a single side of the connecting section 101d containing a notch, the current-carrying capacity of the electrical connecting plate 1 with current-increasing portions 102 disposed on both sides is much higher.

As shown in FIG. 10, a first connecting section 101da and a second connecting section 101db are connected to two ends of the first body portion 101b respectively. To be specific, the connecting section 101d includes the first connecting section 101da and the second connecting section 101db, and the first connecting section 101d is at a specified angle to the first body portion 101b, where the specified angle is 90°. The electrical connecting plate 1 is generally located at the edge of the battery module M, and is configured to electrically connect the electrode leads 302 of a plurality of battery cells 3. In another specific embodiment, the avoidance region 101a is a via hole opened in the connecting section 101d, and the current-increasing portion 102 is located in the connecting section 101d. In a specific implementation, the avoidance region 101a is a via hole opened in the first connecting section 101da, and the current-increasing portion 102 is located in the first connecting section 101da. At a position of the first connecting section 101da where the via hole is opened, the area decreases, and the passage area at the position also decreases. Therefore, the current-increasing portion 102 is disposed in a specified region around the avoidance region 101a to increase the passage area and effectively improve the current-carrying capacity of the electrical connecting plate 1. It needs to be noted that the current-increasing portion 102 includes a first current-increasing portion 102a and a second current-increasing portion 102b. The first current-increasing portion 102a and the second current-increasing portion 102b are both located in the first connecting section 101da. The first current-increasing portion 102a, the via hole, and the second current-increasing portion 102b are spaced out in a width direction X1 of the first connecting section 101da. The spaced-out arrangement facilitates balanced distribution of electrical current, avoids excessive deviation of the passage area, and also facilitates control of the size of the current-increasing portion 102 in the thickness direction H of the electrical connecting plate 1.

Specifically, in an embodiment, the first current-increasing portion 102a is connected to a side wall of the first connecting section 101da, and the second current-increasing portion 102b is connected to a hole wall of the via hole. The current-increasing portion 102 is bent so that both the first current-increasing portion 102a and the second current-increasing portion 102b fit snugly with the first connecting section 101da. The first current-increasing portion 102a is bent along the side wall of the first connecting section 101da, and extends toward a direction close to the via hole. In this way, the edge of the first current-increasing portion 102a is close to the hole wall of the via hole but without blocking the via hole. The closer the width of the first current-increasing portion 102a is to the hole wall of the via hole, the larger the passage area of the electrical connecting plate 1. The second current-increasing portion 102b is bent along the hole wall of the via hole and extends toward a direction away from the via hole. In this way, the second current-increasing portion 102b is close to the side wall of the first connecting section 101da, and the width of the second current-increasing portion 102b is closer to the edge of the first connecting section 101da, and the larger the passage area of the electrical connecting plate 1.

Further, the avoidance region 101a is a notch opened in the second connecting section 101db. To be specific, the second connecting section 101db is locally narrowed. Electrode leads 302 of some battery cells 3 contain a protruding part, and the notch fits the protruding part, thereby facilitating connection between the body portion 101 and the battery cells 3. However, after the notch is disposed in the second connecting section 101db, the area at the position of the notch decreases, and the passage area at the position also decreases. Therefore, a current-increasing portion 102 is disposed in a specified region around the notch to increase the passage area and effectively improve the current-carrying capacity of the electrical connecting plate 1.

It needs to be noted that the current-increasing portion 102 may further include a third current-increasing portion 102c. The third current-increasing portion 102c is located on the first body portion 101b. As restricted by the wiring harness separator, in the width direction X2 of the first body portion 101b, the width of the third current-increasing portion 102c is less than the width of the first body portion 101b, but the width of the third current-increasing portion 102c is close to the width of the first body portion 101b, thereby increasing the passage area of the electrical connecting plate 1. A notch is disposed in the second connecting section 101db. The notch and the third current-increasing portion 102c are arranged in a length direction X1 of the first body portion 101b. Because a notch is disposed on the first body portion 101b, the third current-increasing portion 102c disposed increases the current-carrying capacity of the electrical connecting plate 1.

As shown in FIG. 11, the second part 11 is connected to an end of the first part 10. The body portion 101 includes a first body portion 101b and a second body portion 101c. The first body portion 101b is connected to the second body portion 101c by the connecting section 101d. The current-increasing portion 102 is located on the first body portion 101b and the second body portion 101c. One end of the second body portion 101c is connected to the second part 11. One end of the first body portion 101b is connected to an output end of the battery module M.

In this embodiment of this application, in the thickness direction H of the electrical connecting plate 1, the current-increasing portion 102 is located on one side of the body portion 101, and the current-increasing portion 102 is located above the body portion 101. When the electrical connecting plate 1 is connected to the battery cells 3, in the thickness direction H, the current-increasing portion 102 is located above the electrical connecting plate 1, or, located below the electrical connecting plate 1. With the current-increasing portion 102 being disposed on one side of the body portion 101, the electrical connecting plate 1 is merely locally thickened in the height direction, without affecting the length direction and the width direction, thereby occupying a relatively small space. As shown in FIG. 9, in this embodiment of this application, a groove 101e is further disposed in the body portion 101, and the groove 101e is located on one or two sides of the current-increasing portion 102. When the current-increasing portion 102 of the electrical connecting plate 1 is bent, damage caused by stress concentration of the electrical connecting plate 1 arising from the bending can be avoided, thereby ensuring appropriate strength performance and functionality of the bent electrical connecting plate 1.

Specifically, grooves 101e may be disposed on both sides of the current-increasing portion 102, and the width of each groove 101e is greater than 1.2 mm, thereby further avoiding the problem of stress concentration of the electrical connecting plate 1 arising from the bending.

It needs to be noted that the width of the groove 101e is generally set to 1.5 mm.

As can be learned from the foregoing detailed description of this application, the electrical connecting plate 1 provided in this embodiment includes a first part 10 and a second part 11. The first part 10 includes a body portion 101 and a current-increasing portion 102. A connecting section 101d and an avoidance region 101a are disposed on the body portion 101. The avoidance region 101a is a via hole or notch opened in the connecting section 101d. The current-increasing portion 102 is located in a specified region around the via hole or notch. After the notch or via hole is disposed in the connecting section 101d, the area at the position of the notch or via hole decreases, and the passage area at the position also decreases. Therefore, the current-increasing portion 102 is disposed in the specified region around the notch or via hole to increase the passage area and effectively improve the current-carrying capacity of the electrical connecting plate 1.

Although this application has been described with reference to exemplary embodiments, various improvements may be made to the embodiments without departing from the scope of this application, and the parts therein may be replaced with equivalents. Particularly, to the extent that no structural conflict exists, various technical features mentioned in various embodiments can be combined in any manner. This application is not limited to the specific embodiments disclosed herein, but includes all technical solutions falling within the scope of the claims.

## Claims

1. An electrical connecting plate (1), wherein the electrical connecting plate (1) is configured to electrically connect a plurality of battery cells (3) of a battery module (M), and the electrical connecting plate (1) comprises a first part (10) and a second part (11);
the first part (10) comprises a current-increasing portion (102) and a body portion (101) containing an avoidance region (101a), the avoidance region (101a) is a via hole or notch opened in the electrical connecting plate (1), and is configured to avoid parts of the battery cells (3), the current-increasing portion (102) is configured to increase the passage area of the electrical connecting plate (1);
the current-increasing portion (102) is located in a specified region around the avoidance region (101a), and the current-increasing portion (102) is connected to a side of the body portion (101) in a thickness direction (H) of the electrical connecting plate; and
the second part (11) is connected to ends of the body portion (101) and is configured to connect to the battery cell (3);
wherein the body portion (101) comprises a first body portion (101b) and a connecting section (101d), and the avoidance region (101a) is a via hole or notch opened in the connecting section (101d);
the body portion (101) further comprises a second body portion (101c), and the first body portion (101b) is connected to the second body portion (101c) through the connecting section (101d); and
the current-increasing portion (102) is located on the first body portion (101b) and the second body portion (101c).

2. The electrical connecting plate (1) according to claim 1, wherein a width of the current-increasing portion (102) is less than a width of the first body portion (101b).

3. The electrical connecting plate (1) according to claim 1 or 2, wherein a groove (101e) is further disposed in the body portion (101), and the groove (101e) is located on one or two sides of the current-increasing portion (102).

4. The electrical connecting plate (1) according to any one of claims 1 to 3, wherein the current-increasing portion (102) and the body portion (101) are integrally formed; and
the current-increasing portion (102) is bent along a side wall of the body portion (101), and the body portion (101) fits snugly with the current-increasing portion (102).

5. A battery module (M), comprising a plurality of battery cells (3) and the electrical connecting plate (1) according to any one of claims 1 to 4, wherein the second part (11) of the electrical connecting plate (1) electrically connects electrode leads of the battery cells (3).

6. A battery pack (P), comprising the battery module (M) according to claim 5.

7. A device using a battery cell as a power supply, comprising: a power source, wherein the power source is configured to provide a driving force for the device; and the battery module (M) configured to provide electrical energy to the power source according to claim 5.

## Patentansprüche

1. Elektrische Verbindungsplatte (1), wobei die elektrische Verbindungsplatte (1) dazu ausgestaltet ist, eine Mehrzahl von Batteriezellen (3) eines Batteriemoduls (M) elektrisch zu verbinden, und die elektrische Verbindungsplatte (1) einen ersten Teil(10) und einen zweiten Teil (11) umfasst;
der erste Teil (10) einen Stromerhöhungsabschnitt (102) und einen Körperabschnitt(101) mit einer Umgehungsregion (101a) umfasst, wobei die Umgehungsregion (101a) ein(e) in der elektrischen Verbindungsplatte (1) angebrachte(s) Durchgangsloch oder Einkerbung ist und dazu ausgestaltet ist, Teile der Batteriezellen (3) zu umgehen, wobei der Stromerhöhungsabschnitt (102) dazu ausgestaltet ist, die Durchlassfläche der elektrischen Verbindungsplatte (1) zu vergrößern;
der Stromerhöhungsabschnitt (102) sich in einem vorgegebenen Bereich um die Umgehungsregion (101a) herum befindet und der Stromerhöhungsabschnitt (102) mit einer Seite des Körperabschnitts (101) in einer Dickenrichtung (H) der elektrischen Verbindungsplatte verbunden ist; und der zweite Teil (11) mit Enden des Körperabschnitts (101) verbunden ist und dazu ausgestaltet ist, mit der Batteriezelle (3) verbunden zu werden;
wobei der Körperabschnitt (101) einen ersten Körperabschnitt (101b) und einen Verbindungsbereich (101d) umfasst und die Umgehungsregion (101a) ein(e) in dem Verbindungsbereich (101d) angebrachte(s) Durchgangsloch oder Einkerbung ist; der Körperabschnitt (101) ferner einen zweiten Körperabschnitt (101c) umfasst und der erste Körperabschnitt (101b) durch den Verbindungsbereich (101d) mit dem zweiten Körperabschnitt (101c) verbunden ist; und der Stromerhöhungsabschnitt (102) sich auf dem ersten Körperabschnitt (101b) und dem zweiten Körperabschnitt (101c) befindet.

2. Elektrische Verbindungsplatte (1) nach Anspruch 1, wobei eine Breite des Stromerhöhungsabschnitts (102) kleiner als eine Breite des ersten Körperabschnitts (101b) ist.

3. Elektrische Verbindungsplatte (1) nach Anspruch 1 oder 2, wobei ferner eine Nut (101e) in dem Körperabschnitt (101) angeordnet ist und die Nut (101e) sich auf einer oder zwei Seiten des Stromerhöhungsabschnitts (102) befindet.

4. Elektrische Verbindungsplatte (1) nach einem der Ansprüche 1 bis 3, wobei der Stromerhöhungsabschnitt (102) und der Körperabschnitt (101) einstückig ausgebildet sind; und
der Stromerhöhungsabschnitt (102) entlang einer Seitenwand des Körperabschnitts (101) gebogen ist und der Körperabschnitt (101) eng mit dem Stromerhöhungsabschnitt (102) zusammengepasst ist.

5. Batteriemodul (M), das eine Mehrzahl von Batteriezellen (3) und die elektrische Verbindungsplatte (1) nach einem der Ansprüche 1 bis 4 umfasst, wobei der zweite Teil (11) der elektrischen Verbindungsplatte (1) Elektrodenleitungen der Batteriezellen (3) elektrisch verbindet.

6. Batteriepack (P), welches das Batteriemodul (M) nach Anspruch 5 umfasst.

7. Vorrichtung, die eine Batteriezelle als Energieversorgung verwendet, Folgendes umfassend: eine Energiequelle, wobei die Energiequelle dazu ausgestaltet ist, eine Antriebskraft für die Vorrichtung bereitzustellen; und das Batteriemodul (M), das dazu ausgestaltet ist, der Energiequelle nach Anspruch 5 elektrische Energie bereitzustellen.

## Revendications

1. Plaque de connexion électrique (1), dans laquelle la plaque de connexion électrique (1) est configurée pour connecter électriquement une pluralité de cellules de batterie (3) d'un module de batterie (M), et la plaque de connexion électrique (1) comprend une première partie (10) et une seconde partie (11) ;
la première partie (10) comprend une portion d'augmentation de courant (102) et une portion de corps (101) contenant une région d'évitement (101a), la région d'évitement (101a) est un trou traversant ou une encoche ouvert(e) dans la plaque de connexion électrique (1), et est configurée pour éviter des parties des cellules de batterie (3), la portion d'augmentation de courant (102) est configurée pour augmenter la zone de passage de la plaque de connexion électrique (1) ;
la portion d'augmentation de courant (102) est située dans une région spécifiée autour de la région d'évitement (101a), et la portion d'augmentation de courant (102) est connectée à un côté de la portion de corps (101) dans une direction d'épaisseur (H) de la plaque de connexion électrique ; et la seconde partie (11) est connectée aux extrémités de la portion de corps (101) et est configurée pour se connecter à la cellule de batterie (3) ;
dans laquelle la portion de corps (101) comprend une première portion de corps (101b) et une section de connexion (101d), et la région d'évitement (101a) est un trou traversant ou une encoche ouvert(e) dans la section de connexion (101d) ; la portion de corps (101) comprend en outre une seconde portion de corps (101c), et la première portion de corps (101b) est connectée à la seconde portion de corps (101c) par l'intermédiaire de la section de connexion (101d) ; et
la portion d'augmentation de courant (102) est située sur la première portion de corps (101b) et la seconde portion de corps (101c).

2. Plaque de connexion électrique (1) selon la revendication 1, dans laquelle une largeur de la portion d'augmentation de courant (102) est inférieure à une largeur de la première portion de corps (101b).

3. Plaque de connexion électrique (1) selon la revendication 1 ou 2, dans laquelle une rainure (101e) est en outre disposée dans la portion de corps (101), et la rainure (101e) est située sur un ou deux côtés de la portion d'augmentation de courant (102).

4. Plaque de connexion électrique (1) selon l'une quelconque des revendications 1 à 3, dans laquelle la portion d'augmentation de courant (102) et la portion de corps (101) sont formées d'un seul tenant, et
la portion d'augmentation de courant (102) est pliée le long d'une paroi latérale de la portion de corps (101), et la portion de corps (101) s'adapte parfaitement à la portion d'augmentation de courant (102).

5. Module de batterie (M), comprenant une pluralité de cellules de batterie (3) et la plaque de connexion électrique (1) selon l'une quelconque des revendications 1 à 4, dans lequel la seconde partie (11) de la plaque de connexion électrique (1) connecte électriquement les fils d'électrode des cellules de batterie (3).

6. Bloc-batterie (P), comprenant le module de batterie (M) selon la revendication 5.

7. Dispositif utilisant une cellule de batterie comme alimentation électrique, comprenant : une source d'alimentation, dans lequel la source d'alimentation est configurée pour fournir une force motrice au dispositif ; et le module de batterie (M) configuré pour fournir de l'énergie électrique à la source d'alimentation selon la revendication 5.
